# EUROPEAN PATENT SPECIFICATION

(11) **EP 3 885 626 B1**
(45) Date of publication and mention of the grant of the patent: **31.07.2024**
(21) Application number: 21167807.3
(22) Date of filing: 04.03.2020
(51) Int. Cl.: F16L 25/00, B65H 54/70, F16J 15/3252, F16L 27/02, F16L 39/04

(54) **COUPLING DEVICE**
KUPPLUNGSVORRICHTUNG
DISPOSITIF DE COUPLAGE

(30) Priority: 08.04.2019 JP 2019073272
(43) Date of publication of application: 29.09.2021
(62) Divisional of application: 20160904.7
(73) Proprietor: TMT Machinery, Inc., Osaka-shi, Osaka 541-0041 (JP)
(72) Inventor: Sugiyama, Kenji, Kyoto, 612-8686 (JP); Takahashi, Tomoya, Kyoto, 612-8686 (JP)
(74) Representative: Hoffmann Eitle

(56) References cited:
- EP-A1- 3 312 120
- WO-A1-2010/081246
- US-A1- 2014 203 513

## Description

### BACKGROUND OF THE INVENTION

The present invention relates to a coupling device.

Japanese Laid-Open Patent Publication No. H11-280976 discloses a coupling device formed by a male joint and a female joint. In the coupling device, a valve is provided in a passage formed inside of the male joint and the female joint. When the male joint and the female joint are decoupled from each other, the valve causes the passage to close. However, if the coupling device with such a valve as above is provided on a pipe connected to a yarn sucking device used for a spun yarn take-up system, for example, yarns are likely to be caught by the valve. Moreover, the passage becomes narrow due to the valve therein, leading to easy yarn clogging.

Then, such a structure is preferred, as a coupling device to be provided in the pipe connected to the yarn sucking device, that is configured with couplers without any valves as described in Japanese Laid-Open Patent Publication No. 2018-66443, for example. The coupling device described in Japanese Laid-Open Patent Publication No. 2018-66443 includes a male coupler and a female coupler, either of which is fixed on a movable base. When the movable base is moved upwardly in coupling of the male coupler and the female coupler, the movable base is brought into a horizontally movable state. Accordingly, even if some horizontal deviation is generated between the male coupler and the female coupler, horizontal movement of either of the couplers together with the movable base corrects the horizontal deviation. This allows coupling of the male coupler and the female coupler.

Similar coupling devices are derivable from US 2014/0203513 A1, WO 2010/081246 A1 and EP 3 312 120 A1.

### SUMMARY OF THE INVENTION

If an axis of the male coupler is parallel to an axis of the female coupler, the coupling device described in Japanese Laid-Open Patent Publication No. 2018-66443 operates with no problem. On the other hand, if the axis of the male coupler is not parallel to the axis of the female coupler (i.e., if the axis of the male coupler is inclined with respect to the axis of the female coupler), it is difficult to insert the male coupler into the female coupler, leading to possibility of poor coupling. Likewise, in the coupling device described in Japanese Laid-Open Patent Publication No. H11-280976, if an axis of the male joint is not parallel to an axis of the female joint, it is difficult to open the valve appropriately, leading to possibility of poor coupling.

The present invention has been made in view of the above problem. An object of the present invention is to provide a coupling device suitable for arrangement in a pipe connected to a yarn sucking device and capable of coupling paired couplers if axes of the couplers are not parallel to each other.

A first aspect of the present invention provides a coupling device including the features of claim 1, in particular with a first coupler and a second coupler, the coupling device configured to connect the first coupler and the second coupler by moving one of the first coupler and the second coupler to the other of the first coupler and the second coupler, the first coupler including a first cylinder body, the second coupler including a second cylinder body facing the first cylinder body, a cylindrical ring member, a seal ring, and a bias mechanism. The ring member is engaged on an outer side of the second cylinder body with a gap, and is movable in an axial direction of the second cylinder body. The seal ring is arranged between the second cylinder body and the ring member. The bias mechanism biases the ring member toward the first cylinder body. A sealing member is disposed on at least one of an end face of the first cylinder body and an end face of the ring member. When one of the couplers is moved toward the other of the couplers, the end face of the first cylinder body contacts the end face of the ring member via the sealing member, whereby an inner passage of the first cylinder body is in communication with an inner passage of the second cylinder body.

In the coupling device according to the aspect of the present invention, the ring member engaged on the second cylinder body is biased toward the first cylinder body by the bias mechanism. The end face of the ring member contacts the end face of the first cylinder body via the sealing member, whereby the inner passage of the first cylinder body is in communication with the inner passage of the second cylinder body. Here, since the gap is obtained between the second cylinder body and the ring member, the ring member biased by the bias mechanism is variable in its attitude. Accordingly, even when the axis of the first coupler is not parallel to the axis of the second coupler, the attitude of the ring member is adjusted such that the end face of the ring member contacts the end face of the first cylinder body via the sealing member. This achieves coupling of the first coupler and the second coupler. Moreover, since the ring member is provided outside of the second cylinder body, both the first cylinder body and the second cylinder body are configurable such that no additional element is arranged in the inner passages individually. Consequently, yarns are capable of passing through the first coupler and the second coupler smoothly, and are suitably useable for the pipe connected to the yarn sucking device.

The present invention may be arranged such that the sealing member is provided on the end face of the ring member.

In doing so, the position of the sealing member is adjusted simultaneously with adjustment of the attitude of the ring member. Accordingly, the end face of the ring member is capable of contacting the end face of the first cylinder body via the sealing member certainly.

The present invention is arranged such that a retainer configured to prevent removal of the ring member from the second cylinder body is provided on the second coupler.

Provision of such a retainer is able to reliably maintain the ring member to be engaged on the second cylinder body, leading to prevention of poor coupling.

The present invention may be arranged such that the second coupler further includes a cylindrical regulator disposed outside of the ring member with a gap, and that the regulator includes an end portion, adjacent to the first cylinder body, where a protruding portion protruding inwardly in a radial direction is provided as the retainer.

In doing so, only assembling the regulator achieves easy provision of the retainer.

The present invention is arranged such that the seal ring has a V-shaped cross section orthogonal to the circumferential direction.

In doing so, the seal ring is deformable, and thus the attitude of the ring member is flexibly variable. Accordingly, the first coupler is couplable with the second coupler more certainly when the axis of the first coupler is not parallel to the axis of the second coupler.

The present invention may be arranged such that a flange portion protruding outwardly in the radial direction is formed at the end portion of the first cylinder body adjacent to the second cylinder body.

In doing so, the end face of the first cylinder body is enlarged. Accordingly, the first coupler is couplable with the second coupler suitably if the second coupler is slightly shifted with respect to the first coupler in a direction orthogonal to the axial direction.

The present invention may be arranged such that the bias mechanism includes a spring.

Using the spring as the bias mechanism achieves a low-cost structure of the bias mechanism.

The present invention may be arranged such that the bias mechanism includes a plural number of the springs arranged in line in a circumferential direction of the ring member.

The plural number of the springs are provided, whereby variation in number of the springs allows control of a biasing force. Moreover, more flexible variation in attitude of the ring member is obtainable by the plural number of the springs biasing the ring member than the case where the ring member is biased by one spring.

The present invention may be arranged such that a detent member configured to prevent pivot of the ring member in the circumferential direction is provided.

The ring member is prevented from pivoting, leading to prevention of damages on the bias mechanism due to an unreasonable force applied to the bias mechanism.

Another aspect of the present disclosure provides a spun yarn take-up system including: a plurality of spun yarn take-up devices arranged in line in a predetermined direction, a yarn threading robot including a sucking retaining unit capable of suction-retaining a yarn and configured to be movable in the predetermined direction and be capable of performing yarn threading operation to each of the spun yarn take-up devices, and a yarn waste unit where the yarn sucked by the sucking retaining unit is wasted, and the coupling device described above is provided on a waste yarn passage extending from the sucking retaining unit to the yarn waste unit.

As described above, the coupling device according to the present invention is configured so as to pass the yarn easily and smoothly, and thus is suitable for use for the waste yarn passage connected to the sucking retaining unit. Moreover, an operator is not always beside an automatic device such as the yarn threading robot, and thus time for leaving a state where the device is clogged by the yarn is likely to become long. Consequently, it is much important to adopt the coupling device unlikely to be clogged by the yarn.

The present spun yarn take-up system may be arranged such that a plurality of the first couplers of the coupling device disposed on the waste yarn passage are provided correspondingly in the spun yarn take-up devices, and the second coupler of the coupling device disposed on the waste yarn passage is provided in the yarn threading robot.

In the coupling device according to the present invention, the second coupler is more complexed and higher in price than the first coupler. With the structure described above, only one high-priced second coupler is needed, leading to reduction in cost.

The present spun yarn take-up system may be arranged such that, in the coupling device disposed on the waste yarn passage, an inner diameter of the first cylinder body is larger than an inner diameter of the second cylinder body.

The yarn sucked by the sucking retaining unit travels from the second cylinder body to the first cylinder body. Accordingly, with the structure as described above, the passage is widened at a boundary between the second cylinder body and the first cylinder body when the yarn passes through the boundary. This achieves easy and smooth passing of the yarn.

The present spun yarn take-up system may be arranged such that a compressed fluid supplier is further provided and configured to cause the sucking retaining unit to generate a suction force by supplying a compressed fluid to the sucking retaining unit, and the coupling device described above is provided on a compressed fluid suppling passage extending from the compressed fluid supplier to the sucking retaining unit.

The coupling device according to the present invention allows certain coupling of the first coupler and the second coupler, leading to suitable usage of the couplers for the passage where the compressed fluid flows.

The present spun yarn take-up system may be arranged such that a plurality of the first couplers of the coupling device disposed on the compressed fluid suppling passage are provided correspondingly in the spun yarn take-up devices, and the second coupler of the coupling device disposed on the compressed fluid suppling passage is provided in the yarn threading robot.

In the coupling device according to the present invention, the second coupler is more complexed and higher in price than the first coupler. With the structure described above, only one high-priced second coupler is needed, leading to reduction in cost.

The present spun yarn take-up system may be arranged such that, in the coupling device disposed on the compressed fluid suppling passage, an inner diameter of the second cylinder body is larger than an inner diameter of the first cylinder body.

The compressed fluid supplied to the yarn threading robot flows from the first cylinder body to the second cylinder body. Accordingly, with the structure as described above, the passage is widened at the boundary between the second cylinder body and the first cylinder body when the compressed fluid passes through the boundary. This allows suppressed increase in passage resistance at the boundary.

The present spun yarn take-up system may be arranged such that one coupler of the coupling device disposed on the waste yarn passage and one coupler of the coupling device disposed on the compressed fluid suppling passage are attached to a common attaching member, and the attaching member is moved, whereby the coupling devices are coupled.

In this case, the two coupling devices are coupled simultaneously. When used is the coupling device of a normal type where a male coupler is inserted into a female coupler, it requires more strict precision to couple the plural coupling devices simultaneously than the case where one coupling device is coupled. On the other hand, in the coupling device according to the present invention, it is only necessary to contact the end face of the ring member to the end face of the first cylinder body via the sealing member. Accordingly, strict required precision is suppressible even when the plural coupling devices are coupled simultaneously.

### BRIEF DESCRIPTION OF THE DRAWINGS

FIG. 1 is a schematic diagram of a spun yarn take-up system of an embodiment according to the present invention.
FIG. 2 is a side view illustrating a spun yarn take-up device and a yarn threading robot.
FIG. 3 is a cross-section of a suction.
FIG. 4 is a side view illustrating a coupling device for compressed air and a coupling device for waste yarn.
FIG. 5 is a cross-section of a first coupler and a second coupler.
FIG. 6 is a cross-section of the first coupler and the second coupler.

### DESCRIPTION OF THE PREFERRED EMBODIMENTS

### (Overall Structure of Spun Yarn Take-Up System)

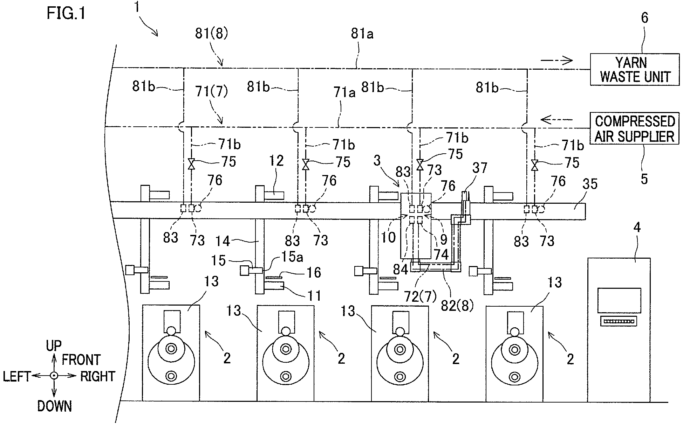

FIG. 1 is a schematic diagram of a spun yarn take-up system of the present embodiment. A spun yarn take-up system 1 according to the present embodiment includes a plurality of spun yarn take-up devices 2 arranged in a predetermined direction, a yarn threading robot 3 configured to perform yarn threading operation to the spun yarn take-up devices 2, a central controller 4 configured to control operation of the spun yarn take-up devices 2 and the yarn threading robot 3, a compressed air supplier 5 (corresponding to the compressed fluid supplier in the present invention) configured to supply compressed air (corresponding to the compressed fluid in the present invention) to the yarn threading robot 3, and a yarn waste unit 6 where yarns sucked with the yarn threading robot 3 are wasted. In the present embodiment, one yarn threading robot 3, one compressed air supplier 5, and one yarn waste unit 6 are each provided, but the number thereof may be two or more. In FIG. 1, yarns are not illustrated to avoid complexity in the figure. Hereinafter, directions shown in FIG. 1 will be referred to appropriately for convenience of explanation.

### (Spun Yarn Take-Up Device)

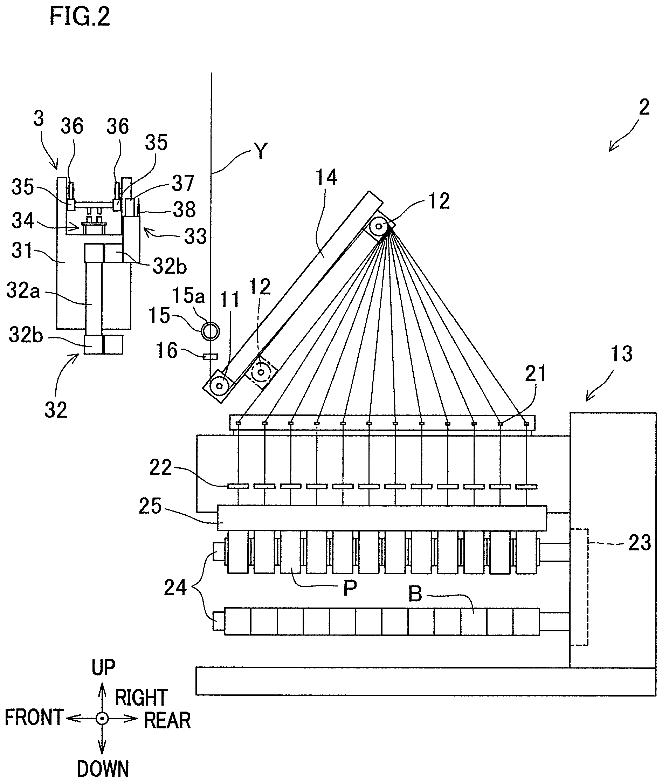

Now, the spun yarn take-up device 2 will be detailed. FIG. 2 is a side view illustrating the spun yarn take-up device 2 and the yarn threading robot. 3 The spun yarn take-up device 2 is configured to feed yarns Y spun out from an unillustrated spinning device to a winding unit 13 by a first godet roller 11 and a second godet roller 12, and to wind the yarns Y onto bobbins B in the winding unit 13, thereby forming packages P.

The first godet roller 11 is a roller having an axis substantially in parallel to a left-right direction and is provided above a front end portion of the winding unit 13. The second godet roller 12 is a roller having an axis substantially in parallel to the left-right direction, and is provided above and rearward of the first godet roller 11. The first godet roller 11 and the second godet roller 12 are each rotationally driven by an unillustrated motor. The second godet roller 12 is movably supported by a guide rail 14. The guide rail 14 extends obliquely upward and rearward from adjacent to the first godet roller 11. The second godet roller 12 is movable along the guide rail 14 by an unillustrated cylinder. The second godet roller 12 is movable between a winding position (see solid lines in FIG. 2) where winding of the yarns Y is performed and a yarn threading position (see dashed lines in FIG. 2) adjacent to the first godet roller 11.

The spun yarn take-up device 2 further includes an aspirator 15 and a yarn regulating guide 16. The aspirator 15 is configured to suck and retain the yarns Y spun out from the spinning device temporarily before yarn threading is performed by the yarn threading robot 3. The aspirator 15 extends along the left-right direction. The aspirator 15 includes, at its right end portion, a suction port 15a for sucking the yarns Y. The aspirator 15 is provided somewhat above the first godet roller 11 so that the suction port 15a is positioned near the yarns Y. The yarn regulating guide 16 is provided between the first godet roller 11 and the aspirator 15 with respect to an up-down direction. The yarn regulating guide 16 is, for example, a yarn guide with a comb teeth shape, and functions to regulate intervals between adjacent yarns Y threaded thereon.

The winding unit 13 includes fulcrum guides 21, traverse guides 22, a turret 23, two bobbin holders 24, and a contact roller 25. The fulcrum guides 21 are provided for the yarns Y, and are lined up in a front-rear direction. The traverse guides 22 are provided for the yarns Y, and are lined up in the front-rear direction. The traverse guides 22 are each driven by an unillustrated motor, and are configured to reciprocate in the front-rear direction. With this, the yarns Y threaded onto the traverse guides 22 are traversed about the corresponding fulcrum guides 21.

The turret 23 is a disc-shaped member having an axis substantially in parallel to the front-rear direction. The turret 23 is rotationally driven about an axis by an unillustrated motor. The two bobbin holders 24 have axes in substantially parallel to the front-rear direction and are rotatably supported at an upper end portion and a lower end portion of the turret 23. The bobbin holders 24 are each rotationally driven about an axis by an unillustrated motor. The bobbins B are attached to each of the bobbin holders 24. The bobbins B are respectively provided for the yarns Y and lined up in the front-rear direction.

When the upper bobbin holder 24 is rotationally driven, the yarns Y traversed by the traverse guides 22 are wound onto the bobbins B, whereby packages P are formed. After the completion of the formation of the packages P, the positions of the two bobbin holders 24 are changed upside down as the turret 23 is rotated. As a result, the bobbin holder 24 having been at the lower position is moved to the upper position, which allows the yarns Y to be wound onto the bobbins B attached to the bobbin holder 24, whereby the packages P are formable. Meanwhile, the bobbin holder 24 having been at the upper position is moved to the lower position, and the packages P are collected by an unillustrated package collector.

The contact roller 25 is a roller having an axis substantially in parallel to the front-rear direction and is provided immediately above the upper bobbin holder 24. The contact roller 25 is configured to contact surfaces of the packages P supported by the upper bobbin holder 24. With this, the contact roller 25 applies a contact pressure to the surfaces of the unfinished packages P to adjust a shape of the packages P.

### (Yarn Threading Robot)

Now, the yarn threading robot 3 will be described. As shown in FIG. 2, the yarn threading robot 3 includes a main body 31, a robotic arm 32, a yarn threading unit 33, and a coupling unit 34.

The main body 31 has an unillustrated robot controller mounted inside thereof. The robot controller is configured to control operations of the robotic arm 32, the yarn threading unit 33, and the coupling unit 34. The main body 31 may be supported by and hang down from two guide rails 35. The two guide rails 35 are provided in front of the spun yarn take-up devices 2 so as to be separated from each other in the front-rear direction. The two guide rails 35 extend in the left-right direction so as to cover a range in which the spun yarn take-up devices 2 are provided. Four wheels 36 are provided at an upper end portion of the main body 31. Two wheels 36, which are left and right wheels, are disposed on each of the two guide rails 35. The wheel 36 is rotationally driven by an unillustrated motor, whereby the yarn threading robot 3 is movable along the two guide rails 35 in the left-right direction. In yarn threading operation to one of the spun yarn take-up devices 2, the yarn threading robot 3 performs the yarn threading operation after reaching a position in front of the spun yarn take-up device 2.

The robotic arm 32 is attached to the main body 31. The robotic arm 32 includes arms 32a and joints 32b connecting the arms 32a with one another. Each joint 32b incorporates therein an unillustrated motor. The motor causes the arm 32a to be swung about the joint 32b. This allows the robotic arm 32 to operate three-dimensionally.

The yarn threading unit 33 is attached to a distal end portion of the robotic arm 32. On the yarn threading unit 33, a suction 37 (corresponding to the sucking retaining unit of the present invention) for sucking and retaining the yarns Y and a cutter 38 for cutting the yarns Y are provided.

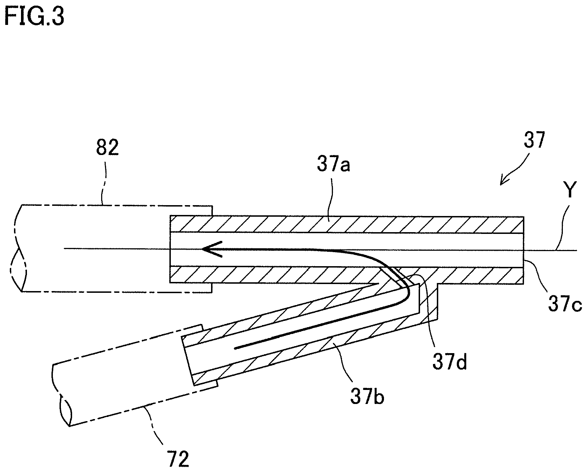

FIG. 3 is a cross-section of the suction 37. The suction 37 includes a suction pipe 37a extending linearly, and a supply pipe 37b unitarily connected to an intermediate portion of the suction pipe 37a. One end portion of the suction pipe 37a (on the right end of FIG. 3) functions as a suction port 37c through which the yarns Y are sucked. An upstream end portion of a robot-side waste yarn hose 82 mentioned later is connected to an other end portion of the suction pipe 37a (on the left end of FIG. 3). Moreover, one end portion of the supply pipe 37b (on the right end of FIG. 3) is connected to an intermediate portion of the suction pipe 37a. At a connecting portion of the suction pipe 37a and the supply pipe 37b, a communication hole 37d is formed so as to bring an inner passage of the suction pipe 37a to be in communication with an inner passage of the suction pipe 37b. A downstream end portion of a robot-side compressed air hose 72 mentioned later is connected to the other end portion of the suction pipe 37b (on the left end of FIG. 3) .

The communication hole 37d is inclined toward the other end portion of the suction pipe 37a. Consequently, compressed air having flowed from the supply pipe 37b into the suction pipe 37a flows from the one end portion to the other end portion of the suction pipe 37a, as indicated by an arrow in FIG. 3. This airflow creates a suction force (negative pressure) at the suction port 37c, which makes it possible to suck the yarns Y from the suction port 37c. The yarns Y sucked from the suction port 37c are discharged to the robot-side waste yarn hose 82 along with the airflow of the compressed air in the suction pipe 37a. The yarn threading robot 3 performs yarn threading operation while sucking and retaining the yarns Y using the suction 37.

The coupling unit 34 forms a part of coupling devices 9, 10 mentioned later. The details of the coupling unit 34 will be given later.

### (Compressed Air Supply Passage and Waste Yarn Passage)

As shown in FIG. 1, the spun yarn take-up system 1 includes a compressed air supply passage 7 (two-dot chain lines in FIG. 1, corresponding to the compressed fluid suppling passage of the present invention) through which an compressed air is supplied from the compressed air supplier 5 to the suction 37 of the yarn threading robot 3, and a waste yarn passage 8 (dashed lines in FIG. 1) through which the yarns Y are wasted from the suction 37 to the yarn waste unit 6.

The compressed air supply passage 7 includes a system-side compressed air hose 71 extending from the compressed air supplier 5 to the spun yarn take-up devices 2, and a robot-side compressed air hose 72 arranged in the yarn threading robot 3. Likewise, the waste yarn passage 8 includes a system-side waste yarn hose 81 extending from the spun yarn take-up devices 2 to the yarn waste unit 6, and a robot-side waste yarn hose 82 arranged in the yarn threading robot 3. The system-side compressed air hose 71 is connected to the robot-side compressed air hose 72 via the compressed-air coupling device 9. The system-side waste yarn hose 81 is connected to the robot-side waste yarn hose 82 via the waste-yarn coupling device 10. The details of the compressed-air coupling device 9 and the waste-yarn coupling device 10 will be given later.

The system-side compressed air hose 71 is formed by a main hose 71a connected to the compressed air supplier 5, and a plurality of sub hoses 71b diverged from the main hose 71a toward the spun yarn take-up devices 2. A compressed-air first coupler 73 arranged in each spun yarn take-up device 2 is attached to a downstream end portion of each sub hose 71b individually. An on-off valve 75 controllable by the central controller 4 is provided on an intermediate portion of each sub hose 71b. A compressed-air second coupler 74 arranged in each coupling unit 34 of the yarn threading robot 3 is attached to an upstream end portion of the robot-side compressed air hose 72.

The system-side waste yarn hose 81 is formed by a main hose 81a connected to the yarn waste unit 6, and a plurality of sub hoses 81b diverged from the main hose 81a toward the spun yarn take-up devices 2. A waste-yarn first coupler 83 arranged in each spun yarn take-up device 2 is attached to an upstream end portion of each sub hose 81b individually. A waste-yarn second coupler 84 arranged in the coupling unit 34 of the yarn threading robot 3 is attached to a downstream end portion of the robot-side waste yarn hose 82.

When the compressed-air second coupler 74 provided in the yarn threading robot 3 is coupled to the compressed-air first coupler 73 provided in any of the spun yarn take-up devices 2, the system-side compressed air hose 71 and the robot-side compressed air hose 72 are connected to each other. Moreover, when the waste-yarn second coupler 84 provided in the yarn threading robot 3 is coupled to the waste-yarn first coupler 83 provided in any of the spun yarn take-up devices 2, the system-side waste yarn hose 81 is connected to the robot-side waste yarn hose 82. Here, a connection sensor 76 is provided in each spun yarn take-up device 2, the sensor being configured to detect coupling between the compressed-air first coupler 73 and the compressed-air second coupler 74. The connection sensor 76 sends coupling signals to the central controller 4.

### (Coupling Device)

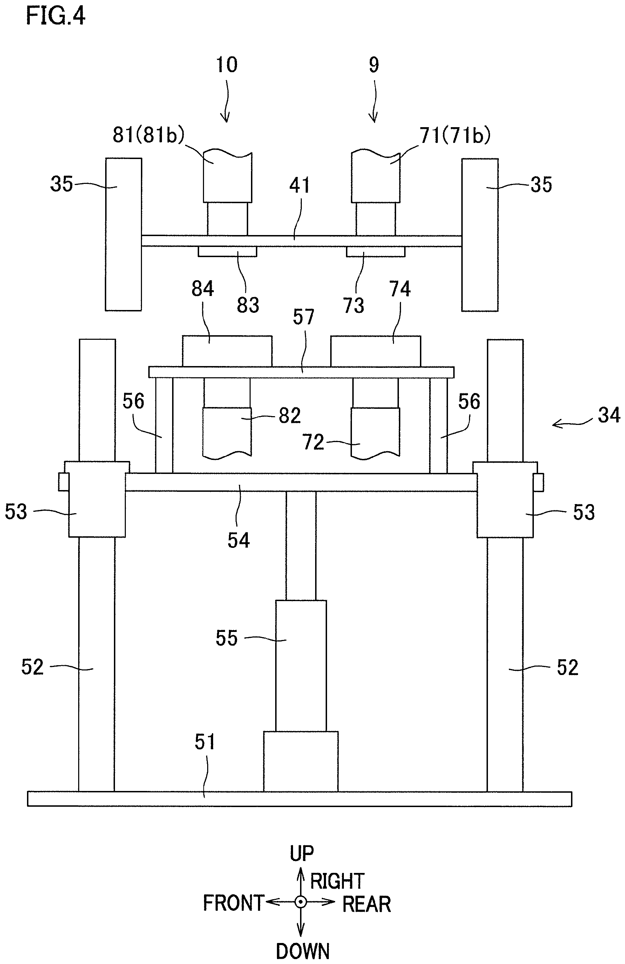

The following describes the details of the compressed-air coupling device 9 and the waste-yarn coupling device 10. FIG. 4 is a side view illustrating the compressed-air coupling device 9 and the waste-yarn coupling device 10. The compressed-air coupling device 9 includes a compressed-air first coupler 73 and a compressed-air second coupler 74. The waste-yarn coupling device 10 includes a waste-yarn first coupler 83 and a waste-yarn second coupler 84.

The compressed-air first coupler 73 and the waste-yarn first coupler 83 for waste yarn are attached in line to a common supporting plate 41. The supporting plate 41 is provided across the two guide rails 35, and is supported by the two guide rails 35 substantially horizontally.

The compressed-air second coupler 74 and the waste-yarn second coupler 84 are disposed in the coupling unit 34 of the yarn threading robot 3. The coupling unit 34 includes, in addition to the compressed-air second coupler 74 and the waste-yarn second coupler 84, a base member 51, a plurality of guide members 52, a plurality of slide members 53, a liftable plate 54, a drive unit 55, a plurality of supporting members 56, and a supporting plate 57 (corresponding to the attaching member in the present invention). The base member 51 is fixed on an upper surface of the main body 31 of the yarn threading robot 3. The guide members 52 are provided so as to extend upwardly from the base member 51. The slide members 53 are attached to the guide members 52 so as to be movable in the up-down direction. The liftable plate 54 is supported by the slide members 53 substantially horizontally. The drive unit 55 is, for example, formed by a cylinder to move the liftable plate 54 upwardly and downwardly. The supporting members 56 are provided so as to extend upwardly from the liftable plate 54. The supporting plate 57 is supported by the slide members 56 substantially horizontally. The compressed-air second coupler 74 and the waste-yarn second coupler 84 are attached in line to the common supporting plate 57.

In yarn threading operation to one of the spun yarn take-up devices 2, the yarn threading robot 3 moves to a position in front of this spun yarn take-up device 2. Then, the compressed-air second coupler 74 faces the compressed-air first coupler 73 of the spun yarn take-up device 2, and the waste-yarn second coupler 84 faces the waste-yarn first coupler 83 of the spun yarn take-up device 2. Under such a state, the drive unit 55 causes the liftable plate 54 to move upwardly. In doing so, the compressed-air second coupler 74 is coupled to the compressed-air first coupler 73, and the waste-yarn second coupler 84 is coupled to the waste-yarn first coupler 83. That is, the compressed-air second coupler 74 and the waste-yarn second coupler 84 moved by the drive unit 55 correspond to the "one coupler" in the present invention, whereas the compressed-air first coupler 73 and the waste-yarn first coupler 83 correspond to the "the other coupler" in the present invention.

When receiving a connection signal from a connection sensor 76 of the spun yarn take-up device 2, the central controller 4 causes the on-off valve 75 of the spun yarn take-up device 2 to open. As a result, the compressed air supply passage 7 extending from the compressed air supplier 5 to the suction 37 of the yarn threading robot 3 is brought into communication, leading to a state in which yarn threading to the yarn threading robot 3 is possible.

### (Detailed Structure of Coupler)

Now, the detailed structure of the waste-yarn coupling device 10 will be described. Since the compressed-air coupling device 9 is basically configured in the same manner as the waste-yarn coupling device 10, the description of the compressed-air coupling device 9 is omitted. In the following description, the waste-yarn first coupler 83 is simply referred to as a first coupler 83, and the waste-yarn second coupler 84 is simply referred to as a second coupler 84 where appropriate.

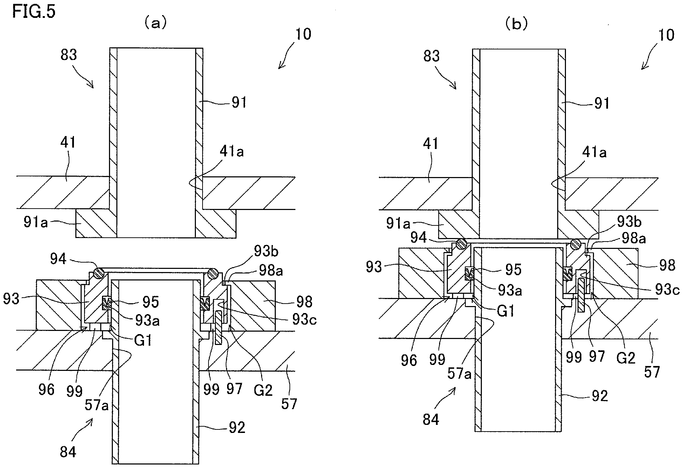

FIG. 5 is a cross-section of the first coupler 83 and the second coupler 84. FIG. 5a shows a state before the first coupler 83 and the second coupler 84 are coupled. FIG. 5b shows a state where the first coupler 83 and the second coupler 84 are coupled. The system-side waste yarn hose 81 and the robot-side waste yarn hose 82 are not shown in FIG.5.

The first coupler 83 includes a first cylinder body 91. The first cylinder body 91 extends in the up-down direction (axial direction). The first cylinder body 91 includes, at its lower end portion, a flange portion 91a protruding outwardly in a radial direction. The first cylinder body 91 is fixed on the supporting plate 41 while being inserted into an attachment hole 41a formed in the supporting plate 41 so as for the flange portion 91a to be positioned on the lower side of the supporting plate 41.

The second coupler 84 includes a second cylinder body 92, a ring member 93, a sealing member 94, a seal ring 95, a bias mechanism 96, a detent pin 97, and a regulator 98. The second cylinder body 92 extends in the up-down direction (axial direction). A lower end face of the first cylinder body 91 faces an upper end face of the second cylinder body 92. The second cylinder body 92 is fixed on the supporting plate 57 while being inserted into an attachment hole 57a formed in the supporting plate 57.

The ring member 93 is a cylindrical member substantially coaxially with the second cylinder body 92, and is disposed outside of the second cylinder body 92. The ring member 93 is engaged with an outer portion of the second cylinder body 92, the portion protruding upwardly from the supporting plate 57. The ring member 93 is movable in the up-down direction along the second cylinder body 92. An annular groove 93a is formed in an inner circumferential surface of the ring member 93. The ring member 93 has an inner diameter uniform except the annular groove 93a and the inner diameter of the ring member 93 is larger than an outer diameter of the second cylinder body 92. Accordingly, a gap G1 is present between the outer circumferential surface of the second cylinder body 92 and the inner circumferential surface of the ring member 93. A stepped portion 93b is formed in the outer circumferential surface of the ring member 93. An outer diameter of a portion above the stepped portion 93b is smaller than an outer diameter of a portion below the stepped portion 93b. In addition, an engagement hole 93c for engagement with the detent pin 97 is formed in a bottom surface of the ring member 93.

The sealing member 94 and the seal ring 95 are provided for obtaining airtightness when the first coupler 83 and the second coupler 84 are coupled. The sealing member 94 is an O-ring disposed on an upper end face of the ring member 93. The seal ring 95 is arranged between the second cylinder body 92 and the ring member 93, more specifically in the annular groove 93a of the ring member 93. The seal ring 95 is an annular V-shaped packing whose cross section orthogonal with respect to the circumferential direction of the seal ring 95 is V-shaped. Consequently, the seal ring 95 is easy deformed.

The bias mechanism 96 includes a plurality of springs 99. The springs 99 are arranged between the bottom face of the ring member 93 and the supporting plate 57, and configured to bias the ring member 93 toward the first cylinder body 91 (upwardly). The plurality of (e.g., 16) springs 99 are preferably arranged at equal intervals in the circumferential direction, but may be arranged at different intervals.

The detent pin 97 (corresponding to the detent member in the present invention) is a member for preventing pivot of the ring member 93 in the circumferential direction. The detent pin 97 is attached to the supporting plate 57 so as to protrude upwardly from the supporting plate 57. An upper portion of the detent pin 97 is inserted into an engagement hole 93c of the ring member 93, whereby the detent pin 97 is engaged with the ring member 93 to prevent pivot of the ring member 93. Here, the detent pin 97 is loosely engaged with the engagement hole 93c such that a gap is generated therebetween for variation in attitude of the ring member 93 with respect to the second cylinder body 92.

The regulator 98 is a cylindrical member substantially coaxially with the second cylinder body 92, and is disposed outside of the ring member 93. At an upper end portion of the regulator 98, a protruding portion 98a (corresponding to the retainer in the present invention) is formed that protrudes inwardly in the radial direction. The protruding portion 98a of the regulator 98 contacts the stepped portion 93b of the ring member 93 from the above, leading to prevention of the ring member 93 from upward removal from the second cylinder body 92. The regulator 98 has an inner diameter uniform except the protruding portion 98a and the inner diameter of the regulator 98 is larger than an outer diameter of the ring member 93. Accordingly, a gap G2 is present between an outer circumferential surface of the ring member 93 and the inner circumferential surface of the regulator 98.

As shown in FIG. 5a, the yarn threading robot 3 is moved such that the second coupler 84 faces the first coupler 83 when the first coupler 83 and the second coupler 84 are coupled. Subsequently, the yarn threading robot 3 causes the drive unit 55 to move the liftable plate 54 upwardly, thereby moving the second coupler 84 upwardly. Accordingly, as shown in FIG. 5b, the sealing member 94 provided on the upper end face of the ring member 93 is pressed against the lower end face of the first cylinder body 91 (lower end face of the flange portion 91a). In other words, the upper end face of the ring member 93 contacts the lower end face of the first cylinder body 91 via the sealing member 94. In this manner, the inner passage of the first cylinder body 91 is in communication with the inner passage of the second cylinder body 92, achieving coupling between the first coupler 83 and the second coupler 84. When the first coupler 83 and the second coupler 84 are coupled, the lower end face of the first cylinder body 91 and the upper end face of the ring member 93 are sealed with the sealing member 94, and the outer circumferential surface of the second cylinder body 92 and the inner circumferential surface of the ring member 93 are sealed with the seal ring 95. This ensures airtightness.

Here, as for the waste-yarn coupling device 10, the inner diameter of the first cylinder body 91 is larger than the inner diameter of the second cylinder body 92. The yarns Y sucked by the suction 37 of the yarn threading robot 3 flow from the waste-yarn second coupler 84 (second cylinder body 92) toward the waste-yarn first coupler 83 (first cylinder body 91). Accordingly, the inner diameter of the first cylinder body 91 is made larger than the inner diameter of the second cylinder body 92, leading to the widened passage at the boundary between the first cylinder body 91 and the second cylinder body 92.

In contrast to this, as for the compressed-air coupling device 9, the inner diameter of the second cylinder body is larger than the inner diameter of the first cylinder body. The compressed fluid supplied to the yarn threading robot 3 flows from the compressed-air first coupler 73 (first cylinder body) to the compressed-air second coupler 74 (second cylinder body). Accordingly, the inner diameter of the second cylinder body is made larger than the inner diameter of the first cylinder body, leading to the widened passage at the boundary between the first cylinder body and the second cylinder body.

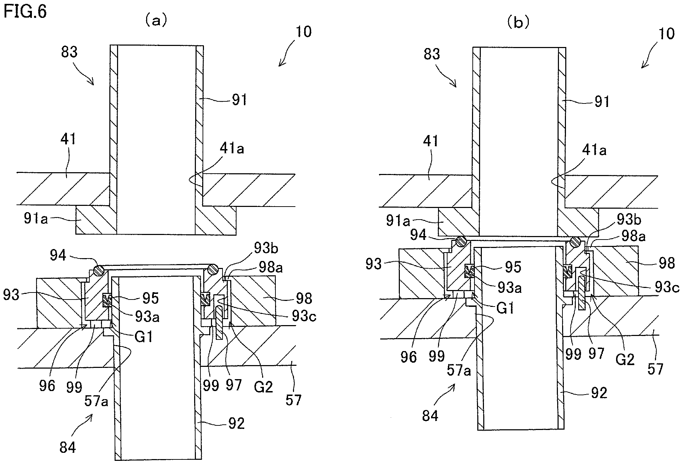

The following describes the case where the axis of the first coupler 83 is not parallel to the axis of the second coupler 84 with reference to FIG. 6. FIG. 6 is a cross-section of the first coupler 83 and the second coupler 84 in which the axis of the second coupler 84 is inclined with respect to the axis of the first coupler 83. FIG. 6a shows a state before the first coupler 83 and the second coupler 84 are coupled. FIG. 6b shows a state where the first coupler 83 and the second coupler 84 are coupled. The system-side waste yarn hose 81 and the robot-side waste yarn hose 82 are not shown in FIG.6.

Here, it is assumed that the axis of the second coupler 84 is inclined with respect to the axis of the first coupler 83 as shown in FIG. 6a since the supporting plate 57 is inclined with respect to a horizontal plane. When the second coupler 84 is moved upwardly from this state, a part of the sealing member 94 provided on the upper end face of the ring member 93 (specifically, a part of the right side in FIG. 6) is firstly pressed against the lower end face of the first cylinder body 91. Now, the ring member 93 is merely biased by the springs 99, and thus is not fixed on the second cylinder body 92. Moreover, the gap G1 is obtained between the ring member 93 and the second cylinder body 92, and the gap G2 is obtained between the ring member 93 and the regulator 98. Consequently, after the part of the sealing member 94 contacts the lower end face of the first cylinder body 91, the attitude of the ring member 93 (inclination with respect to the second cylinder body 92) is varied such that the axis of the ring member 93 biased by the springs 99 is substantially parallel to the axis of the first cylinder body 91 as the second coupler 84 is moved upwardly. Finally, as shown in FIG. 6b, the axis of the ring member 93 is substantially parallel with respect to the axis of the first cylinder body 91, whereby the sealing member 94 is entirely pressed against the lower end face of the first cylinder body 91. Accordingly, even when the axis of the first coupler 83 is not parallel to the axis of the second coupler 84, the inner passage of the cylinder body 91 is able to be brought into sealing communication with the inner passage of the second cylinder body 92. This achieves coupling of the first coupler 83 and the second coupler 84.

### (Advantageous Effects)

In the coupling device (the compressed-air coupling device 9 and the waste-yarn coupling device 10) according to the present embodiment, the ring member 93 engaged on the second cylinder body 92 is biased toward the first cylinder body 91 by the bias mechanism 96, and the end face of the ring member 93 contacts the end face of the first cylinder body 91 via the sealing member 94, whereby the inner passage of the first cylinder body 91 is brought into communication with the inner passage of the second cylinder body 92. Here, the gap G1 is obtained between the second cylinder body 92 and the ring member 93, and thus the ring member 93 biased by the bias mechanism 96 is variable in its attitude. Accordingly, even when the axis of the first coupler 83 is not parallel to the axis of the second coupler 84, the attitude of the ring member 93 is adjusted such that the end face of the ring member 93 contacts the end face of the first cylinder body 91 via the sealing member 94. This achieves coupling of the first coupler 83 and the second coupler 84. Moreover, since the ring member 93 is provided outside of the second cylinder body 92, both the first cylinder body 91 and the second cylinder body 92 are configurable such that no additional element is arranged in the inner passages individually. Consequently, the yarns Y easily pass through the first coupler 83 and the second coupler 84 smoothly, and thus the couplers are suitably usable for the pipe connected to the suction 37 (yarn sucking device).

In the present embodiment, the sealing member 94 are provided on the end face of the ring member 93. In doing so, the position of the sealing member 94 is adjusted simultaneously with adjustment of the attitude of the ring member 93. Accordingly, the end face of the ring member 93 is capable of contacting the end face of the first cylinder body 91 via the sealing member 94 certainly.

In the present embodiment, the retainer 98a configured to prevent removal of the ring member 93 from the second cylinder body 92 is provided on the second coupler 84. Provision of such a retainer 98a is able to reliably maintain the ring member 93 to be engaged in the second cylinder body 92, leading to prevention of poor coupling.

In the present embodiment, the second coupler 84 further includes the cylindrical regulator 98 disposed outside of the ring member 93 with the gap G2, and the regulator 98 includes the end portion adjacent to the first cylinder body 91 where the protruding portion 98a protruding inwardly in the radial direction is provided as the retainer. In doing so, only assembling the regulator 98 achieves easy provision of the retainer 98a.

In the present embodiment, the seal ring 95 has a V-shaped cross section orthogonal with respect to the circumferential direction. In doing so, the seal ring 95 is deformable easily, and thus the attitude of the ring member 93 is flexibly variable. Accordingly, the first coupler 83 and the second coupler 84 are certainly couplable when the axis of the first coupler 83 is not parallel to the axis of the second coupler 84.

In the present embodiment, the first cylinder body 91 includes, at its end portion adjacent to the second cylinder body 92, the flange portion 91a protruding outwardly in the radial direction. In doing so, the end face of the first cylinder body 91 is widened. Accordingly, the first coupler 83 is couplable with the second coupler 84 suitably if the second coupler 84 is slightly shifted in a direction orthogonal to the axial direction with respect to the first coupler 83.

In the present embodiment, the bias mechanism 96 includes the springs 99. Using the springs 99 as the bias mechanism 96 achieves a low-priced structure of the bias mechanism 96.

In the present embodiment, the bias mechanism 96 includes the springs 99 arranged in line in the circumferential direction of the ring member 93. The plural number of the springs 99 are provided, whereby variation in number of the springs 99 allows control of a biasing force. Moreover, more flexible variation in attitude of the ring member 93 is obtainable by the plural number of the springs 99 biasing the ring member 93 than the case where the ring member 93 is biased by one spring 99.

In the present embodiment, the detent member 97 configured to prevent pivot of the ring member 93 in the circumferential direction is provided. The ring member 93 is prevented from pivoting, leading to prevention of damages on the bias mechanism 96 (springs 99) due to an unreasonable force applied to the bias mechanism 96.

In the spun yarn take-up system 1 according to the present embodiment, the waste-yarn coupling device 10 is provided on the waste yarn passage 8 extending from the suction 37 to the yarn waste unit 6. As described above, the waste-yarn coupling device 10 is configured so as to pass the yarns Y easily and smoothly, and thus is suitable for use in the waste yarn passage 8 connected to the suction 37. Moreover, an operator is not always beside an automatic device such as the yarn threading robot 3, time for leaving a state where the device is clogged by the yarns Y is likely to become long. Consequently, it is much important to adopt the coupling device 10 unlikely to be clogged by the yarns.

In the present embodiment, the first couplers 83 of the waste-yarn coupling device 10 disposed on the waste yarn passage 8 are provided correspondingly in the spun yarn take-up devices 2, and the second coupler 84 of the waste-yarn coupling device 10 disposed on the waste yarn passage 8 is provided in the yarn threading robot 3. In the coupling device 10, the second coupler 84 is more complexed and higher in price than the first coupler 83. With the structure described above, only one high-priced second coupler 84 is needed, leading to reduction in cost.

In the present embodiment, as for the waste-yarn coupling device 10 disposed on the waste yarn passage 8, the inner diameter of the first cylinder body 91 is larger than the inner diameter of the second cylinder body 92. The yarns Y sucked by the suction 37 travel from the second cylinder body 92 toward the first cylinder body 91. Accordingly, with the structure as described above, the passage is widened at the boundary between the second cylinder body 92 and the first cylinder body 91 when the yarns Y pass through the boundary. This achieves easy and smooth passing of the yarns Y.

In the present embodiment, the coupling device 9 for waste yarn is provided on the compressed air supply passage 7 extending from the compressed air supplier 5 to the suction 37. The compressed-air coupling device 9 allows certain coupling of the first coupler 73 and the second coupler 74, leading to usage of the couplers for the passage where the compressed fluid flows.

In the present embodiment, the first couplers 73 of the compressed-air coupling device 9 disposed on the compressed air supply passage 7 are provided correspondingly in the spun yarn take-up devices 2, and the second coupler 74 of the compressed-air coupling device 9 disposed on the compressed air supply passage 7 is provided in the yarn threading robot 3. In the compressed-air coupling device 9, the second coupler 74 is more complexed and higher in price than the first coupler 73. With the structure described above, only one high-priced second coupler 74 is needed, leading to reduction in cost.

In the present embodiment, as for the compressed-air coupling device 9 disposed on the compressed air supply passage 7, the inner diameter of the second cylinder body is larger than the inner diameter of the first cylinder body. The compressed fluid supplied to the yarn threading robot 3 flows from the first cylinder body to the second cylinder body. Accordingly, with the structure as described above, the passage is widened at the boundary between the second cylinder body and the first cylinder body when the compressed fluid passes through the boundary. This allows suppressed increase in passage resistance at the boundary.

In the present embodiment, the second coupler 84 (one of the couplers) of the waste-yarn coupling device 10 disposed on the waste yarn passage 8 and the second coupler 74 (the other of the coupler) of the compressed-air coupling device 9 disposed on the compressed air supply passage 7 are attached to the common supporting plate 57, and the supporting plate 57 is moved, whereby the coupling devices 9, 10 are coupled. In this case, the two coupling devices 9, 10 are coupled simultaneously. When used is the coupling device of a normal type where a male coupler is inserted into a female coupler, it requires more strict precision to couple the plural coupling devices simultaneously than the case where one coupling device is coupled. On the other hand, in the coupling devices 9, 10 according to the present embodiment, it is only necessary to contact the end face of the ring member 93 to the end face of the first cylinder body 91 via the sealing member 94. Accordingly, strict required precision is suppressible even when the plural coupling devices 9, 10 are coupled simultaneously.

### (Other Embodiments)

The following will describe modifications of the above-described embodiment.

In the present embodiment described above, the sealing member 94 is provided on the upper end face of the ring member 93. Alternatively, the sealing member 94 may be provided on the lower end face of the first cylinder body 91.

In the present embodiment described above, the regulator 98 is provided to prevent removal of the ring member 93 from the second cylinder body 92. Alternatively, the regulator 98 is omittable. For instance, a retainer configured to prevent removal of the ring member 93 may be provided on the outer circumferential surface of the second cylinder body 92.

In the present embodiment described above, the seal ring 95 is a V-shaped packing whose cross section is V-shaped. Alternatively, another one except the V-shaped packing may be used as the seal ring 95.

In the present embodiment described above, the flange portion 91a is provided on the lower end portion of the first cylinder body 91. However, the flange portion 91a may be omitted when the first cylinder body 91 has a large thickness.

In the present embodiment, the bias mechanism 96 configured to bias the ring member 93 toward the first cylinder body 91 includes the springs 99 arranged in line in the circumferential direction of the ring member 93. However, the structure of the bias mechanism is not limited to this. For instance, the bias mechanism 96 may be formed by one spring 99. Alternatively, the ring member 93 may be biased by an elastic body except the spring 99. Alternatively, the ring member 93 may be biased by a translatory mechanism such as an air cylinder.

In the embodiment above, the detent pin 97 is provided, but the detent pin 97 is omittable.

In the embodiment above, the first couplers 83 are provided in the spun yarn take-up devices 2 individually, and the second coupler 84 is provided in the yarn threading robot 3. However, the second couplers 84 may be provided in the spun yarn take-up devices 2 individually, and the first coupler 83 may be provided in the yarn threading robot 3.

In the embodiment above, the second coupler 84 provided in the yarn threading robot 3 is moved toward the first couplers 83 provided in the spun yarn take-up devices 2 individually. Alternatively, the first couplers 83 provided in the spun yarn take-up devices 2 individually may be moved toward the second coupler 84 provided in the yarn threading robot 3.

In the present embodiment, the compressed-air second coupler 74 provided in the yarn threading robot 3 and the waste-yarn second coupler 84 provided in the yarn threading robot 3 are attached to the common supporting plate 57, and the supporting plate 57 is moved in the up-down direction, whereby the compressed-air second coupler 74 and the waste-yarn second coupler 84 are moved in the up-down direction simultaneously. However, such a structure is not essential. The compressed-air second coupler 74 and the waste-yarn second coupler 84 may be moved in the up-down direction independently.

In the embodiment above, the yarn threading robot 3 is arranged to hang down from the guide rails 35, however, the yarn threading robot 3 does not have to hang down. For example, the yarn threading robot 3 may be arranged to travel on the floor.

## Claims

1. A coupling device (9, 10) with a first coupler (73, 83) and a second coupler (74, 84), the coupling device (9, 10) configured to connect the first coupler (73, 83) and the second coupler (74, 84) by moving one coupler (74, 84) of the first coupler (73, 83) and the second coupler (74, 84) to the other coupler (73, 83) of the first coupler (73, 83) and the second coupler (74, 84),
the first coupler (73, 83) including a first cylinder body (91),
the second coupler (74, 84) including
a second cylinder body (92) facing the first cylinder body (91),
a cylindrical ring member (93) movable in an axial direction of the second cylinder body (92),
a seal ring (95) arranged between the second cylinder body (92) and the ring member (93), and
a bias mechanism (96) biasing the ring member (93) toward the first cylinder body (91),
a sealing member (94) being disposed on at least one of an end face of the first cylinder body (91) and an end face of the ring member (93), and
when the one coupler (74, 84) is moved toward the other coupler (73, 83), the end face of the first cylinder body (91) contacting the end face of the ring member (93) via the sealing member (94), whereby an inner passage of the first cylinder body (91) is in communication with an inner passage of the second cylinder body (92),
wherein the coupling device (9, 10) further comprises a retainer (98a) provided on the second coupler (74, 84) and configured to prevent removal of the ring member (93) from the second cylinder body (92);
wherein the cylindrical ring member (93) is engaged on an outer side of the second cylinder body (92) with a gap;
**characterized in that** the seal ring (95) has a V-shaped cross section orthogonal to the circumferential direction.

2. The coupling device (9, 10) according to claim 1, wherein the sealing member (94) is provided on the end face of the ring member (93).

3. The coupling device (9, 10) according to claim 1 or 2, wherein the second coupler (74, 84) further includes a cylindrical regulator (98) disposed outside of the ring member (93) with a gap, and
the regulator (98) includes an end portion, adjacent to the first cylinder body (91), where a protruding portion (98a) protruding inwardly in a radial direction is provided as the retainer (98a).

4. The coupling device (9, 10) according to any one of claims 1 to 3, wherein a flange portion (91a) protruding outwardly in the radial direction is formed at an end portion of the first cylinder body (91) adjacent to the second cylinder body (92).

5. The coupling device (9, 10) according to any one of claim 1 or 4, wherein the bias mechanism (96) includes a spring (99).

6. The coupling device (9, 10) according to claim 5, wherein the bias mechanism (96) includes a plural number of the springs (99) arranged in line in a circumferential direction of the ring member (93).

7. The coupling device (9, 10) according to any one of claims 1 to 6, further comprising: a detent member (97) configured to prevent pivot of the ring member (93) in the circumferential direction.

## Patentansprüche

1. Kopplungsvorrichtung (9, 10) mit einem ersten Koppler (73, 83) und einem zweiten Koppler (74, 84), wobei die Kopplungsvorrichtung (9, 10) dazu konfiguriert ist, den ersten Koppler (73, 83) und den zweiten Koppler (74, 84) durch Bewegen eines Kopplers (74, 84) des ersten Kopplers (73, 83) und des zweiten Kopplers (74, 84) zu dem anderen Koppler (73, 83) des ersten Kopplers (73, 83) und des zweiten Kopplers (74, 84) zu verbinden,
wobei der erste Koppler (73, 83) einen ersten Zylinderkörper (91) beinhaltet,
der zweite Koppler (74, 84) beinhaltet
einen zweiten Zylinderkörper (92), der dem ersten Zylinderkörper (91) gegenüberliegt,
ein zylindrisches Ringelement (93), das in einer axialen Richtung des zweiten Zylinderkörpers (92) bewegbar ist,
einen Dichtring (95), der zwischen dem zweiten Zylinderkörper (92) und dem Ringelement (93) angeordnet ist, und
einen Vorspannmechanismus (96), der das Ringelement (93) gegen den ersten Zylinderkörper (91) vorspannt,
ein Dichtelement (94), das an mindestens einer der Endflächen des ersten Zylinderkörpers (91) und einer Endfläche des Ringelements (93) angeordnet ist, und
wenn der eine Koppler (74, 84) zu dem anderen Koppler (73, 83) bewegt wird, die Endfläche des ersten Zylinderkörpers (91) die Endfläche des Ringelements (93) über das Dichtelement (94) berührt, wodurch ein Innendurchgang des ersten Zylinderkörpers (91) mit einem Innendurchgang des zweiten Zylinderkörpers (92) in Verbindung steht,
wobei die Kopplungsvorrichtung (9, 10) weiter einen Halter (98a) umfasst, der auf dem zweiten Koppler (74, 84) bereitgestellt und dazu konfiguriert ist, das Entfernen des Ringelements (93) von dem zweiten Zylinderkörper (92) zu verhindern;
wobei das zylindrische Ringelement (93) an einer Außenseite des zweiten Zylinderkörpers (92) in einen Spalt eingreift;
**dadurch gekennzeichnet, dass** der Dichtring (95) einen V-förmigen Querschnitt orthogonal zu der Umfangsrichtung aufweist.

2. Kopplungsvorrichtung (9, 10) nach Anspruch 1, wobei das Dichtelement (94) an der Endfläche des Ringelements (93) bereitgestellt ist.

3. Kopplungsvorrichtung (9, 10) nach Anspruch 1 oder 2, wobei der zweite Koppler (74, 84) weiter einen zylindrischen Regler (98), der außerhalb des Ringelements (93) mit einem Spalt angeordnet ist, beinhaltet, und
der Regler (98) einen Endabschnitt, der an den ersten Zylinderkörper (91) angrenzt, beinhaltet, wobei ein vorragender Abschnitt (98a), der nach innen in einer radialen Richtung vorragt, als der Halter (98a) bereitgestellt ist.

4. Kopplungsvorrichtung (9, 10) nach einem der Ansprüche 1 bis 3, wobei ein Flanschabschnitt (91a), der nach außen in der radialen Richtung vorragt, an einem Endabschnitt des ersten Zylinderkörpers (91) an den zweiten Zylinderkörper (92) angrenzend gebildet ist.

5. Kopplungsvorrichtung (9, 10) nach einem der Ansprüche 1 oder 4, wobei der Vorspannmechanismus (96) eine Feder (99) beinhaltet.

6. Kopplungsvorrichtung (9, 10) nach Anspruch 5, wobei der Vorspannmechanismus (96) eine Mehrzahl der Federn (99), die in Reihe in einer Umfangsrichtung des Ringelements (93) eingerichtet sind, beinhaltet.

7. Kopplungsvorrichtung (9, 10) nach einem der Ansprüche 1 bis 6, weiter umfassend: ein Entspannungselement (97), das dazu konfiguriert ist, Schwenken des Ringelements (93) in der umfänglichen Richtung zu verhindern.

## Revendications

1. Dispositif de couplage (9, 10) pourvu d'un premier coupleur (73, 83) et d'un deuxième coupleur (74, 84), le dispositif de couplage (9, 10) étant configuré pour connecter le premier coupleur (73, 83) et le deuxième coupleur (74, 84) en déplaçant un coupleur (74, 84) du premier coupleur (73, 83) et du deuxième coupleur (74, 84) vers l'autre coupleur (73, 83) du premier coupleur (73, 83) et du deuxième coupleur (74, 84),
le premier coupleur (73, 83) incluant un premier corps (91) de cylindre,
le deuxième coupleur (74, 84) incluant
un deuxième corps (92) de cylindre face au premier corps (91) de cylindre,
un élément annulaire (93) cylindrique mobile dans une direction axiale du deuxième corps (92) de cylindre,
un anneau d'étanchéité (95) agencé entre le deuxième corps (92) de cylindre et l'élément annulaire (93), et
un mécanisme de sollicitation (96) sollicitant l'élément annulaire (93) vers le premier corps (91) de cylindre,
un élément d'étanchéité (94) étant disposé sur au moins l'une d'une face d'extrémité du premier corps (91) de cylindre et d'une face d'extrémité de l'élément annulaire (93), et
lorsque le coupleur (74, 84) est déplacé vers l'autre coupleur (73, 83), la face d'extrémité du premier corps (91) de cylindre étant en contact avec la face d'extrémité de l'élément annulaire (93) par l'intermédiaire de l'élément d'étanchéité (94), selon lequel un passage interne du premier corps (91) de cylindre est en communication avec un passage interne du deuxième corps (92) de cylindre,
dans lequel le dispositif de couplage (9, 10) comprend en outre un dispositif de retenue (98a) prévu sur le deuxième coupleur (74, 84) et configuré pour empêcher un retrait de l'élément annulaire (93) du deuxième corps (92) de cylindre ;
dans lequel l'élément annulaire (93) cylindrique est mis en prise sur un côté externe du deuxième corps (92) de cylindre avec un espace ;
**caractérisé en ce que** l'anneau d'étanchéité (95) présente une section transversale en forme de V orthogonale à la direction circonférentielle.

2. Dispositif de couplage (9, 10) selon la revendication 1, dans lequel l'élément d'étanchéité (94) est prévu sur la face d'extrémité de l'élément annulaire (93).

3. Dispositif de couplage (9, 10) selon la revendication 1 ou la revendication 2, dans lequel le deuxième coupleur (74, 84) inclut en outre un régulateur (98) cylindrique disposé à l'extérieur de l'élément annulaire (93) avec un espace, et
le régulateur (98) inclut une partie d'extrémité, adjacente au premier corps (91) de cylindre, où une partie en saillie (98a) faisant saillie vers l'intérieur dans une direction radiale est prévue en tant que dispositif de retenue (98a).

4. Dispositif de couplage (9, 10) selon l'une quelconque des revendications 1 à 3, dans lequel une partie bride (91a) faisant saillie vers l'extérieur dans la direction radiale est formée au niveau d'une partie d'extrémité du premier corps (91) de cylindre adjacente au deuxième corps (92) de cylindre.

5. Dispositif de couplage (9, 10) selon l'une quelconque des revendications 1 ou 4, dans lequel le mécanisme de sollicitation (96) inclut un ressort (99).

6. Dispositif de couplage (9, 10) selon la revendication 5, dans lequel le mécanisme de sollicitation (96) inclut une pluralité des ressorts (99) agencés en ligne dans une direction circonférentielle de l'élément annulaire (93).

7. Dispositif de couplage (9, 10) selon l'une quelconque des revendications 1 à 6, comprenant en outre : un élément de blocage (97) configuré pour empêcher un pivotement de l'élément annulaire (93) dans la direction circonférentielle.
